Europäisches Patentamt

European Patent Office

Office européen des brevets

(19)

(11) Numéro de publication: **0 005 701**

**A1**

(12) # DEMANDE DE BREVET EUROPEEN

(21) Numéro de dépôt: **78200024.4**

(22) Date de dépôt: **01.06.78**

(51) Int. Cl.²: **F 24 J 3/02**

(43) Date de publication de la demande:
**12.12.79 Bulletin 79.25**

(84) Etats Contractants Désignés:
**BE CH DE FR GB LU NL SE**

(71) Demandeur: **S.A. dite ATELIERS DE CONSTRUCTIONS ELECTRIQUES DE CHARLEROI(ACEC)
54, Chaussée de Charleroi
B-1060 Bruxelles (Saint-Gilles)(BE)**

(72) Inventeur: **Ots, Ivan
Rue Haies Germaine, 19
B-6100 MONT-SUR-MARCHIENNE(BE)**

(74) Mandataire: **Meunier, Marcel et al,
ACEC - Service des Brevets Boite Postale 4
B-6000 Charleroi(BE)**

(54) **Panneau capteur d'énergie solaire.**

(57) L'invention concerne un panneau capteur d'énergie solaire composé d'un vitrage, d'une couche absorbante et d'un fluide échangeur de chaleur circulant dans des canaux.

Elle est caractérisée en ce que dans un élément principal, entre le vitrage (1) et une couche absorbante (2) inaltérable en contact avec le fluide échangeur de chaleur sont ménagés des canaux (3) et en ce que des éléments d'extrémité (6) appropriés sont adaptés aux extrémités de l'élément principal où débouchent les canaux (3).

Utilisable pour des applications domestiques.

Fig.2

EP 0 005 701 A1

# PANNEAU CAPTEUR D'ENERGIE SOLAIRE.

On connaît déjà des panneaux capteurs d'énergie solaire composés d'un vitrage laissant passer les rayons solaires, d'une couche absorbante pour la lumière traversant le vitrage et d'un fluide échangeur de chaleur circulant dans des canaux en contact thermique avec la couche absorbante. Dans les panneaux connus de ce genre, le vitrage est constitué soit en plusieurs feuilles de verre à vitre, séparées par des espaces d'air, soit en une seule feuille de verre à vitre soit en une feuille de plastique transparent. La couche absorbante est par exemple une couche de peinture mate, noire appliquée sur la surface d'un serpentin de tube de cuivre parcouru par un fluide échangeur de chaleur qui peut être de l'eau. Le fluide échangeur de chaleur entre du côté sud au bas du panneau, circule alternativement d'ouest en est, d'est en ouest et sort en haut du panneau, côté nord. Le serpentin peut être soudé sur un clinquant en cuivre également peint en noir pour capter aussi la chaleur rayonnante passant à côté des tubes. Le côté ombre de ces panneaux est généralement garni d'une couche calorifuge. Ces panneaux connus sont lourds et difficiles à transporter.

L'invention a pour but un panneau capteur d'énergie solaire de construction légère, bon marché et facile à transporter, susceptible d'être posé et fixé sur le versant d'un toit et d'y être raccordé à des éléments d'extrémité.

Le panneau capteur d'énergie solaire suivant l'invention est caractérisé en ce que dans un élément principal entre le vitrage et la couche absorbante sont ménagés des canaux pour le fluide échangeur de chaleur en ce que les parois de ces canaux sont constituées d'une part par le vitrage et d'autre part par une couche absorbante inaltérable en contact avec le fluide échangeur de chaleur, et en ce que des éléments d'extrémité appropriés sont adaptés aux extrémités de l'élément principal où

débouchent les canaux.

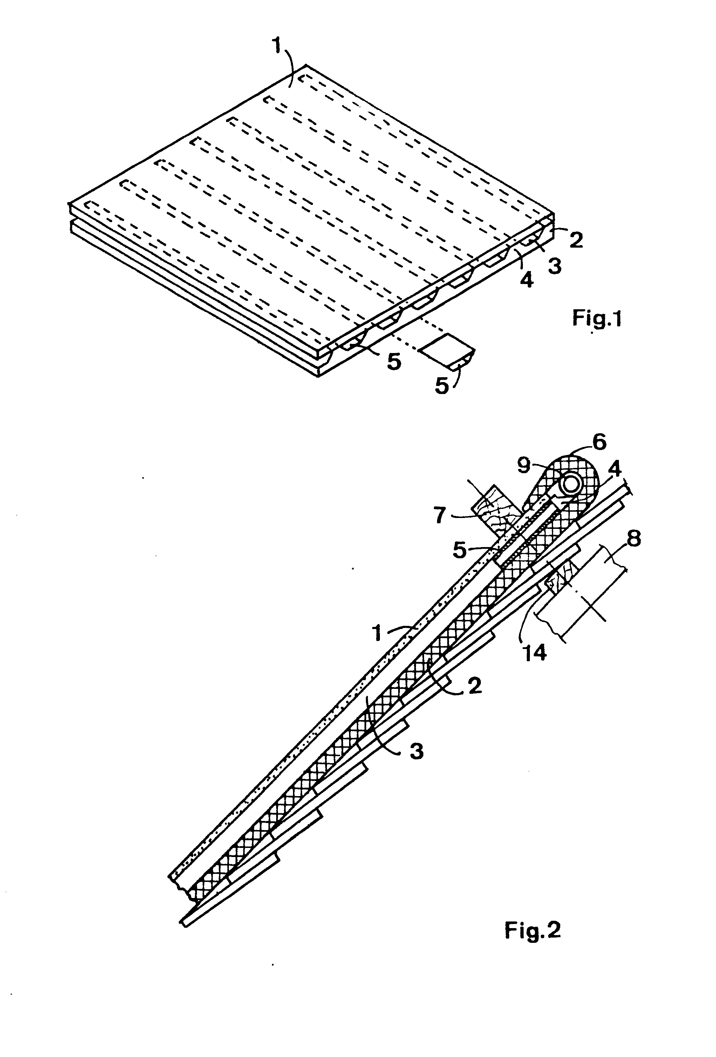

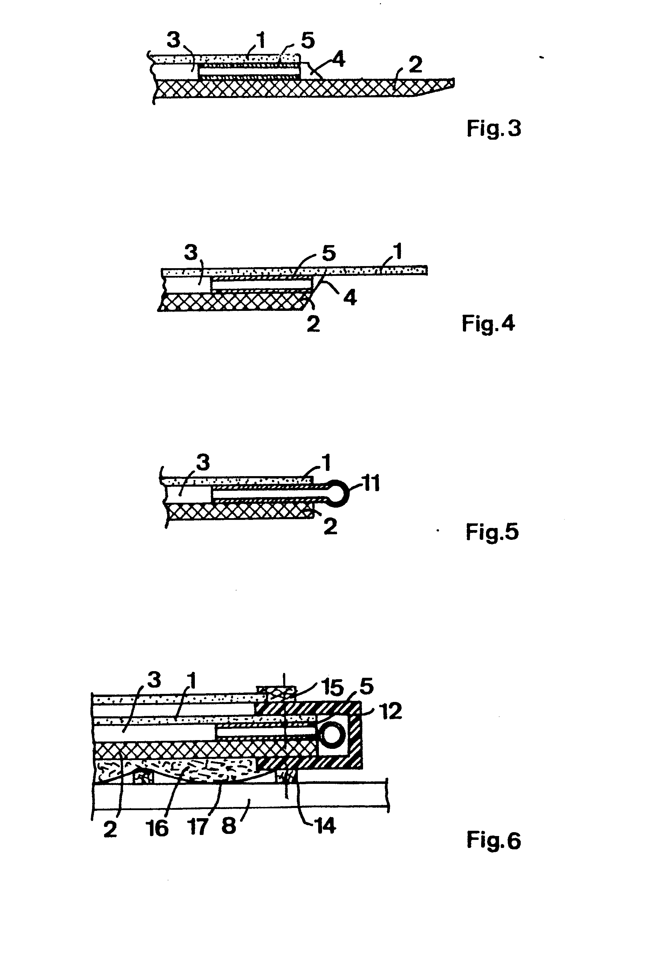

L'invention est expliquée ci-dessous par rapport à un exemple d'une forme d'exécution représentée sur le dessin annexé. La figure 1 de ce dessin représente une vue partielle en perspective d'un élément principal d'un panneau suivant l'invention. Les figures 2, 5, 6 représentent des variantes d'un panneau vues en coupe. Les figures 2, 6 représentent des détails de fixation au toit. Les figures 3 et 4 sont des coupes d'un élément selon fig. 1.

Dans l'élément principal représenté à la figure 1, un vitrage constitué par une feuille transparente 1, par exemple en plastique est collé sur une couche absorbante 2 en plastique ou en carton bitumé. Dans la couche absorbante 2 bitumée sont imprimés des canaux 3 dans le sens de la longueur séparés entr'eux par des nervues 4. Le collage entre la feuille transparente 1 et la couche absorbante 2 bitumée est réalisé à l'endroit des nervures par fusion d'asphalte. Cet élément principal est un élément souple, transportable sous forme de rouleau et peut être découpé en longueurs appropriées sur le chantier. Après le découpage, on peut garnir les extrémités des canaux 3 d'embouts raidisseurs 5 et assembler plusieurs éléments principaux et les fixer directement sur des voliges d'une charpente ou les appliquer sur des tuiles ou ardoises d'un toit existant.

La figure 2 montre, en coupe, la partie supérieure d'un élément principal équipé d'un agencement d'extrémité 6 et fixé sur un toit existant à l'aide d'une latte d'extrémité 7 attachée par exemple par des vis, non représentées, à des chevrons 8. L'agencement d'extrémité 6 est réalisé à l'aide d'un prolongement de la couche absorbante 2 bitumée, rabattue autour d'un bout de tube 9. Le tube 9 est percé d'ouvertures pour permettre l'accès aux canaux 3. Le prolongement de la couche 2, après le rabattement autour du bout de tube 9, recouvre l'extrémité de la feuille transparente 1 et y est soudé par fusion d'asphalte. Le même procédé de soudage par fusion d'asphalte peut être utilisé aux deux extrémités du tube 9 pour rendre étanche l'agencement 6. Pour éviter l'écrasement des canaux 3 lors de la fixation de l'élément principal sur la latte 7, par exemple au moyen de clous traversant l'élément à l'endroit des nervures 4 ou lors de la fixation de la latte 7 aux chevrons 8, des embouts raidisseurs 5 par exemple en tôle d'acier ou en plastique sont introduits dans les extrémités des canaux 3.

La finition de la partie inférieure de l'élément principal montré à la figure 2, ainsi que son mode de fixation au toit peut être identique à ce qui est représenté pour la partie supérieure à la figure 2. Les canaux 3 et les agencements d'extrémité sont parcourus par un fluide échangeur de chaleur qui peut être de l'eau. Ce fluide est véhiculé soit par effet de thermosiphon dans les canaux 3, soit à la fois par effet de thermosiphon et d'une pompe auxiliaire, non représentée. Le fluide peut ensuite traverser un échangeur de chaleur non représenté à l'intérieur du toit comme cela est en soi connu. Le fluide traversant les canaux 3 doit nécessairement posséder la propriété de ne pas former des couches réfléchissantes au contact avec la feuille transparente 1 d'une part ou de la couche absorbante 2 d'autre part. Il peut être nécessaire, dans ce but, de mélanger à ce fluide des adjuvants appropriés, par exemple un détergent qui assure un mouillage parfait et de la feuille transparente 1 d'une part et de la couche absorbante 2 d'autre part.

La figure 3 montre une coupe d'un élément principal préparé pour permettre une finition des agencements d'extrémité 6 telle que montrée à la figure 2.

La figure 4 montre une coupe d'un élément principal préparé pour permettre le rabattement d'un prolongement de la feuille transparente 1 autour d'un tube 9, non représenté. Après le rabattement autour du tube 9, l'extrémité du prolongement de la feuille transparente 1 est soudée par fusion d'asphalte à la couche absorbante bitumée 2.

La figure 5 montre une autre possibilité de réaliser la finition des extrémités de l'élément principal. Les embouts raidisseurs sont soudés dans des ouvertures de tubes collecteurs 11 de longueur standard 11 et ensuite insérés dans les canaux 3. Plusieurs tubes collecteurs 11, chacun donnant accès à une largeur d'élément principal peuvent ensuite être réunis entr'eux pour former un long tube collecteur donnant accès aux canaux des différents éléments principaux.

La figure 6 montre encore une autre possibilité de finition de l'élément principal. Chaque extrémité de l'élément principal est pincée dans un chéneau 12, par exemple en plastique, muni d'un bout de tuyau de raccordement 13. Le chéneau 12 est pincé entre une volige 14 et une latte 15, par exemple au moyen de vis traversant le tout, depuis la latte 15, jusqu'à la volige 14, pour s'ancrer dans les chevrons 8. La latte 15 peut servir pour maintenir un deuxième vitrage, par exemple en verre. En dessous de la couche absorbante 2 bitumée, soit sur le côté ombre du panneau capteur d'énergie solaire, on peut prévoir, comme cela est en soi connu, une couche 16 en un calorifuge tel que la laine de roche retenu au moyen d'une feuille 17, par exemple en papier Kraft ou en aluminium. Toutefois, il est important de savoir que le panneau, capteur d'énergie solaire suivant la présente invention ne nécessite pas à priori une couche 17 en un calorifuge. En effet, la couche absorbante 2 bitumée est déjà un calorifuge d'une qualité acceptable et, de plus, la chaleur développée par le rayonnement du soleil est dégagée à la surface de la couche absorbante 2 bitumée, laquelle est en contact direct avec le fluide échangeur de la chaleur. Ce n'est que pour des coupes d'éléments principaux particulièrement longues où une couche 16 en calorifuge peut trouver une utilité pratique, car la température du fluide échangeur peut atteindre alors des valeurs relativement élevées.

De même, la feuille transparente qui peut être en plastique ou en un verre spécialement souple est aussi un calorifuge suffisant dans beaucoup de cas de sorte qu'alors un double vitrage n'est pas nécessaire.

Tandis que dans le cas des finitions d'extrémité sans double vitrage, il est possible de se passer d'un cadrage complet des éléments principaux, un tel cadrage complet, non représenté, est évidemment nécessaire pour la réalisation d'un double vitrage selon la figure 6, nécessaire seulement pour de très grandes longueurs d'éléments principaux où le fluide échangeur peut atteindre des températures relativement élevées.

Pour éviter la formation de couches réflissantes, il est possible aussi de traiter les surfaces soit du vitrage 1 soit de la couche absorbante 2 et de les munir par exemple d'une couche très mince d'une épaisseur de l'ordre de grandeur du quart de la longueur d'onde du rayonnement le plus chaud traversant le vitrage et d'un indice de réfraction intermédiaire entre celui des deux milieux qu'elle sépare.

## REVENDICATIONS.

1. Panneau capteur d'énergie solaire composé d'un vitrage laissant passer les rayons solaires, d'une couche absorbante pour la lumière traversant le vitrage et d'un fluide échangeur de chaleur circulant dans des canaux en contact thermique avec la couche absorbante, caractérisé en ce que dans un élément principal, entre le vitrage (1) et la couche absorbante (2) sont ménagés des canaux (3) pour le fluide échangeur de chaleur, en ce que les parois de ces canaux sont constitués d'une part par le vitrage (1) et d'autre part par une couche absorbante (2) inaltérable en contact avec le fluide échangeur de chaleur, et en ce que des éléments d'extrémité (6) appropriés sont adaptés aux extrémités de l' élément principal où débouchent les canaux (3).

2. Panneau suivant la revendication 1, caractérisé en ce que des mesures sont prises pour éviter la formation de couches réfléchissantes entre fluide échangeur de chaleur et vitrage (1) d'une part et couche absorbante (2) d'autre part.

3. Panneau suivant la revendication 2, caractérisé par un traitement de surface du vitrage (1)

4. Panneau suivant une des revendications 2 ou 3 caractérisé par un traitement de surface de la couche absorbante (2).

5. Panneau suivant une des revendications 2, 3 ou 4 caractérisé par un adjuvant approprié mélangé au fluide échangeur de chaleur.

6. Panneau suivant une des revendications précédentes, caractérisé en ce que la couche absorbante (2) est du plastique ou du carton bitumé présentant des nervures (4) de séparation des canaux (3).

7. Panneau suivant une des revendications précédentes, caractérisé en ce que les extrémités de l'élément principal où débouchent les canaux (3) sont réunies par pinçage à des éléments d'extrémités (6).

8. Panneau suivant une des revendications 1 à 6, caractérisé en ce que les extrémités de l'élément principal où débouchent les canaux (3) sont réunies par soudage à des éléments d'extrémité (6).

9. Panneau suivant une des revendications précédentes, caractérisé en ce que les extrémités des canaux (3) de l'élément principal sont garnis d'embouts raidisseurs (5).

10. Panneau suivant la revendication 9, caractérisé en ce qu'à l'endroit des extrémités des canaux, l'élément principal est fixé à un élément solidaire d'un toit (8,14).

11. Panneau suivant une des revendications 1 à 6 caractérisé en ce que les éléments d'extrémité (6) sont constitués par le rabattement sur la feuille transparente (1) d'une patte de prolongement de la couche absorbante (2) et le soudage par fusion d'asphalte.

12. Panneau suivant une des revendications 1 à 6 caractérisé en ce que les éléments d'extrémité (6) sont constitués par le rabattement sur la couche absorbante (2) d'une patte de prolongement de la feuille transparente (1) et soudage par fusion d'asphalte.

13. Panneau suivant la revendication 9 caractérisé en ce que les éléments d'extrémité (6) sont constitués par un tuyau (11) muni d'embouts raidisseurs (5) insérés dans les canaux (3).

Fig.1

Fig.2

0005701

1/2

0005701

Fig.3

Fig.4

Fig.5

Fig.6

Office européen
des brevets

| Catégorie | DOCUMENTS CONSIDERES COMME PERTINENTS | | CLASSEMENT DE LA DEMANDE (Int. Cl.²) |
|---|---|---|---|
| | Citation du document avec indication, en cas de besoin, des parties pertinentes | Revendication concernée | |
| | US - A - 3 991 742 (GERBER)  * Colonnes 3,4,5,6; figures 3,4 * | 1-3,10 | F 24 J 3/02 |
| | -- | | |
| | US - A - 3 076 450 (GOUGH)  * Colonne 1 et 2; figures 1,2, 3 * | 1 | |
| | -- | | |
| | FR - A - 2 369 514 (ARTWEGER)  * Pages 22-26; figures 1,2,3,4 * | 1 | DOMAINES TECHNIQUES RECHERCHES (Int. Cl.²) |
| | -- | | F 24 J |
| A | DE - A - 2 636 533 (TRIMBOLI) | 1 | |
| A | FR - A - 2 359 382 (FIAT) | 1 | |
| A | US - A - 3 513 828 (MASTERS) | 1 | |
| A | US - A - 3 923 038 (CUTCHAW) | 1 | |
| A | US - A - 3 965 887 (GRAMER) | 1 | |
| A | US - A - 4 031 881 (THIEL) | 1 | |
| A | US - A - 3 943 911 (YU) | 1 | |
| | ---- | | |

Le présent rapport de recherche a été établi pour toutes les revendications

| Lieu de la recherche | Date d'achèvement de la recherche | Examinateur |
|---|---|---|
| La Haye | 14-02-1979 | SMETS |

OEB Form 1503.1  06.78